Europäisches Patentamt

European Patent Office

Office européen des brevets

(19)

(11) Veröffentlichungsnummer: **0 241 862 B1**

(12) # EUROPÄISCHE PATENTSCHRIFT

(45) Veröffentlichungstag der Patentschrift: **27.03.91**

(51) Int. Cl.5: **B60K 15/03**

(21) Anmeldenummer: **87105256.9**

(22) Anmeldetag: **09.04.87**

(54) **Vorrichtung zum Austausch von Flüssigkeit zwischen einem ersten und mindestens einem zweiten Behältnis.**

(30) Priorität: **14.04.86 US 851998**

(43) Veröffentlichungstag der Anmeldung:
**21.10.87 Patentblatt 87/43**

(45) Bekanntmachung des Hinweises auf die
Patenterteilung:
**27.03.91 Patentblatt 91/13**

(84) Benannte Vertragsstaaten:
**DE FR GB IT**

(56) Entgegenhaltungen:
**DE-A- 1 933 960       DE-A- 2 440 905**
**DE-A- 2 442 152       DE-A- 3 224 943**
**DE-B- 1 225 512       US-A- 1 751 456**
**US-A- 2 276 963**

(73) Patentinhaber: **DEERE & COMPANY**
**1 John Deere Road**
**Moline, Illinois 61265(US)**

(72) Erfinder: **Lemmon, Norman Frederick**
**2518 Pleasant Drive**
**Cedar Falls Iowa 50613(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

Rank Xerox (UK) Business Services

## Beschreibung

Die Erfindung betrifft eine Vorrichtung zum Austausch von Flüssigkeit zwischen einem ersten und mindestens einem zweiten Behältnis, insbesondere zwischen zwei miteinander verbundenen Tanks eines Kraftfahrzeuges, mit einer im Bodenbereich beider Behältnisse mündenden Leitung, mit einer Ausgleichsleitung zwischen beiden Behältnissen und mit einer Ausgangsleitung, die in das erste Behältnis führt.

Es ist bekannt, beim Vorliegen von Platzmangel oder bei Fertigungsproblemen, anstatt eines großen Behältnisses mehrere kleine Behältnisse vorzusehen, die miteinander verbunden sind. Desgleichen werden Hauptbehältnissen mitunter Zusatzbehältnisse zugeordnet, um im Bedarfsfall eine größere Menge Flüssigkeit zur Verfügung zu haben.

Bei einer Kraftstoffbehälteranlage gemäß der DE-A-2 440 905 sind zwei Tanks mit jeweils einem tiefer reichenden Topf versehen und über eine Ausgleichsleitung, die unterhalb der vertikalen Mitte in beide Tanks mündet, miteinander verbunden. Die Ausgleichsleitung läßt einen Flüssigkeitsaustausch zwischen beiden Tanks in beiden Richtungen ungehindert zu. Zudem mündet in beide Töpfe eine Leitung, um eine Flüssigkeitsförderung zu dem Tank bzw. Topf zu erreichen, der mit der Ausgangsleitung verbunden ist. Da diese Leitung durch die höher liegende Ausgleichsleitung verlegt ist, bedarf es eines Pumpenmechanismus, um die Höhendifferenz zu überbrücken. Hierzu wird eine Strahlpumpe verwendet, die mittels des von der Kraftstofförderpumpe zurückgeförderten Kraftstoffs eine Injektor-Wirkung auf den in dem zu leerenden Topf befindlichen Kraftstoff ausübt und ihn somit in den Topf mit der Ausgangsleitung fördert.

Nachteilig ist diese Kraftstoffbehälteranlage insofern, als sie den genannten Pumpenmechanismus braucht. Außerdem strömt der zu dem Topf mit der Ausgangsleitung gepumpte Kraftstoff nahezu vollständig wieder durch die Ausgleichsleitung zurück, wenn der betreffende Behälter einer Seitenneigung am Hang unterliegt oder eine Zentrifugalkraft wirkt.

Die DE-B-1 225 512 offenbart einen Schmierölbehälter mit zwei Kammern, die mittels einer Wand voneinander getrennt sind. Im unteren Bereich ist die Wand durchbrochen, um ein aus einer Kugel und einem Trichter bestehendes Rückschlagventil aufzunehmen, wobei der Trichter auf einer Seite liegend in die Wand eingeschweißt ist. Das Rückschlagventil öffnet sich zu der Kammer hin, an die die Ausgangsleitung angeschlossen ist und die Kugel wird mittels eines Käfigs im Bereich des Trichters gehalten. Neigt sich der Behälter zu der Ausgangsleitung hin, öffnet sich das Rückschlagventil und das in dem Behälter befindliche Öl fließt von der dann oben gelegenen Kammer in die mit der Ausgangsleitung. Gerät der Behälter wieder in seine waagrechte Stellung, behindert das Rückschlagventil einen Rückfluß dieses Öls solange, als der Pegel in der Kammer mit der Ausgangsleitung höher steht als in der anderen Kammer. Neigt sich der Behälter in die andere Richtung, schließt sich das Rückschlagventil und ein Abströmen des Öls aus der mit der Ausgangsleitung verbundenen Kammer ist nicht möglich.

Dieser Vorrichtung haftet der Nachteil an, daß insbesondere bei zähem Öl, bzw. einer zähen Flüssigkeit überhaupt, ein Nachfüllen nur langsam vor sich geht, was umso schwerer wiegt, als jeglicher Flüssigkeitsaustausch zwischen beiden Kammern durch das Rückschlagventil erfolgen muß.

Bei einem Ackerschlepper (US-A-3 311 183) sind zwei Satteltanks vorgesehen, die über eine in deren Bodenbereich mündende Leitung miteinander verbunden sind, um so den Austausch von Treibstoff von einem Satteltank in den anderen zu ermöglichen, wobei in einen von ihnen eine Ausgangsleitung mündet, die zu einer Treibstoffpumpe führt.

Diese aus einer Leitung bestehende Vorrichtung zum Austausch von Flüssigkeit funktioniert so lange zufriedenstellend, als sich beide Satteltanks ungefähr auf der gleichen Höhe befinden, d. h., als die Leitung waagerecht verläuft. Hingegen findet kein Flüssigkeitsaustausch mehr statt, sobald der zweite und nicht mit der Ausgangsleitung verbundene Satteltank aufgrund der Neigung des Ackerschleppers tiefer liegt als der erste Satteltank. Vielmehr wird sich der erste Satteltank in den zweiten entleeren, und die Treibstoffzufuhr ist unterbrochen.

Es ist zwar aus der US-A-4 288 086 eine Vorrichtung zum Austausch von Treibstoff zwischen einem Haupt- und einem Zusatztank bekannt. Dort erfolgt jedoch mittels einer Pumpe, die über einen Treibstoffpegelsensor geregelt wird, ein Umpumpen von Treibstoff in den Haupttank, sobald die in diesem vorhandene Treibstoffmenge unter ein bestimmtes Niveau fällt. Abgesehen davon, daß die Pumpe und der Treibstoffpegelsensor nebst den erforderlichen Leitungen zusätzliche Kosten verursachen, würde diese Lösung bei zwei seitlich einer Kippachse angeordneten Behältnissen zu einem möglicherweise bedenklichen Ungleichgewicht führen, wenn zuviel Treibstoff in den einen Tank gepumpt wird.

Die der Erfindung zugrunde liegende Aufgabe wird darin gesehen, eine Vorrichtung zum Austausch von Flüssigkeit zwischen einem ersten und mindestens einem zweiten Behältnis zu schaffen, mit deren Hilfe auf kostengünstige Weise eine unter normalen Verhältnissen ausreichende Befüllung des mit der Ausgangsleitung verbundenen Behältnisses in kurzer Zeit erreicht wird und die Gleichgewichtslage eines mit den Behältern versehenen Geräts infolge des bei Hanglage erfolgenden Flüssigkeitsausgleichs im wesentlichen gewahrt bleibt.

Diese Aufgabe ist erfindungsgemäß durch die Lehre des Patentanspruchs 1 gelöst worden.

Auf diese Weise findet ein Nachfließen von Flüssigkeit in den ersten Behälter, aus dem sie mittels der Ausgangsleitung entnommen wird, ohne die Zuhilfenahme eines Pumpenmechanismus' statt. Dieser Flüssigkeitsausgleich findet somit auch stets statt, wenn der statische Druck aufgrund der Füllhöhe oder des Durchfahrens von Kurven höher ist als in dem ersten Behältnis. Da die Ausgleichsleitung nicht in der gleichen Höhe wie die Leitung angeordnet ist, fließt Flüssigkeit aus dem ersten Behältnis erst wieder ab, wenn ein Pegel erreicht ist, der oberhalb des durch den Ausgleich über die Leitung erreichten Pegels liegt. Es bleibt demnach beim Neigungswechsel zu dem zweiten Behältnis hin mehr in dem ersten Behältnis, als bei einem Neigungswechsel hin zu dem ersten Behältnis; das sich durch die Ausgleichsleitung einstellende Gleichgewicht zwischen beiden Behältnissen wird dadurch nur unwesentlich beeinflußt, aber es bleibt normalerweise eine Sicherheitsreserve in dem ersten Behältnis, die bis zu einem Viertel des gesamten Inhalts des ersten Behältnisses betragen kann.

Ein Ungleichgewicht kann auch durch die Ausführung der Ausgleichsleitung, wie sie in den Patentansprüchen 2 bis 4 beschrieben ist, verhindert werden. Denn infolge dieser Ausgleichsleitung kann der Inhalt des ersten Behältnisses um maximal ein Viertel des Inhalts des zweiten Behältnisses größer sein, wenn die Ausgleichsleitung in der Mitte beider Behältnisse einmündet. Die große Dimensionierung des Durchlaßquerschnitts erlaubt einen schnellen Ausgleich, solange sich das Flüssigkeitsniveau oberhalb der Mündungen der Ausgleichsleitung befindet. Das gleiche tritt ein, wenn sich das zweite Behältnis aufgrund der Neigung des Kraftfahrzeuges oder eines die Behältnisse tragenden Rahmens oberhalb des ersten befindet. Die Anordnung der Mündungen in unterschiedlicher Höhe bei beiden Behältnissen gemäß Patentanspruch 4 führt auch schon bei einem geringem Anheben des zweiten Behältnisses gegenüber dem ersten Behältnis zu einem schnellen Austausch von Flüssigkeit über die Ausgleichsleitung und nicht nur durch die Leitung.

Die Anordnung des Anfangs der Ausgangsleitung entsprechend Patentanspruch 5 bewirkt, daß stets ungefähr die gleiche Restmenge bei vollkommen geleerten Behältnissen verbleibt, unabhängig davon, nach welcher Seite die Behältnisse geneigt werden.

Das Verhältnis der Größen des Durchlaßquerschnitts der Ausgangsleitung und der Leitung stellt sicher, daß ein Zulauf von Flüssigkeit zu dem ersten Behältnis stets schneller erfolgt als dessen Ablauf durch die Ausgangsleitung.

Beide Behältnisse kommen mit nur einer normalerweise erforderlichen Entlüftungsvorrichtung aus, wenn eine beide Behältnisse verbindende Lüftungsleitung vorgesehen ist.

Die Anwendung der erfindungsgemäßen Vorrichtung ist keinesfalls auf das Gebiet von Ackerschleppern oder Industriemaschinen begrenzt; vielmehr können auch Flugzeuge, Tankfahrzeuge, Schiffe oder Gebäude mit dieser Vorrichtung versehen werden, wenn sie zwei oder noch mehr miteinander verbundene Behältnisse enthalten, deren relative Lage zueinander sich in Höhenrichtung verändert.

In der Zeichnung ist ein nachfolgend näher beschriebenes Ausführungsbeispiel der Erfindung dargestellt. Es zeigt:

Fig. 1      eine erfindungsgemäße Vorrichtung zum Austausch von Flüssigkeit zwischen zwei Behältnissen in schematischer Darstellung und

Fig. 2      die Vorrichtung aus Figur 1 in leicht abgewandelter Form.

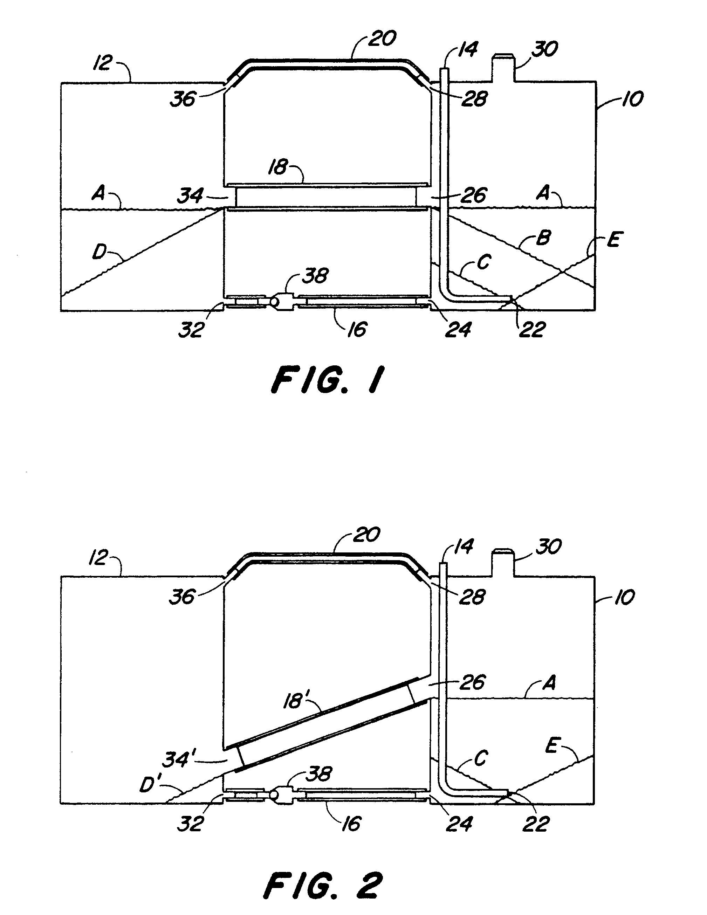

In Figur 1 sind ein rechtes oder erstes Behältnis 10, ein linkes oder zweites Behältnis 12, eine Ausgangsleitung 14, eine Ausgleichsleitung 18, eine Leitung 16 und eine Lüftungsleitung 20 zu sehen. Einen derartigen Zusammenbau findet man typischerweise an einem nicht dargestellten Ackerschlepper, wobei die Behältnisse dann normalerweise die Funktion von Treibstofftanks einnehmen, von denen jeweils einer auf jeder Seite des Ackerschleppers in dessen Längsrichtung gesehen befestigt ist. Angaben wie oben, unten, links und rechts verstehen sich jeweils mit Blick auf die Zeichnung.

Die Ausgangsleitung 14 führt vom oberen Endbereich des ersten Behältnisses 10 bis hinab zu dessen Bodenfläche und beginnt dort ungefähr in der Mitte, d. h. ihre Eintrittsöffnung 22 liegt etwa im Schnittpunkt der Diagonalen der Bodenfläche. Das obere Ende der Ausgangsleitung 14 ist an eine nicht gezeigte Treibstofförderpumpe angeschlossen. Im unteren Endbereich, also im Bodenbereich, des ersten Behältnisses 10 ist eine Mündung 24 vorgesehen, die das erste Behältnis 10 mit der Leitung 16 verbindet. Etwa in der Mitte seiner Höhe ist das erste Behältnis 10 mit einer Mündung 26 versehen, an der die Ausgleichsleitung 28 angreift. Eine weitere Mündung 28 befindet sich im oberen Endbereich des ersten Behältnisses 10, die der Be- oder Entlüftung dient und mit der Lüftungsleitung 20 verbunden ist. Schließlich enthält die Oberseite des ersten Behältnisses einen Einfüllstutzen 30, durch den Flüssigkeit, also im speziellen Fall Treibstoff, in die beiden Behältnisse 10 und 12 eingefüllt wird und der eine Öffnung zur Atmosphäre enthält.

Das linke zweite Behältnis 12 ist in diesem Ausführungsbeispiel im wesentlichen von gleicher Größe und Bauart wie das erste rechte Behältnis 10, und es weist die gleiche Höhe wie dieses auf, wenn sich die Behältnisse auf einer waagerechten Ebene befinden. Das linke zweite Behältnis 12 enthält ebenfalls Mündungen 32, 34 und 36 für die Leitung 16, die Ausgleichsleitung 34 und die Lüftungsleitung 20, also in ihrem unteren, ihrem mittleren und ihrem oberen Endbereich.

Die Leitung 16 verbindet die Mündungen 24 und 32 miteinander und enthält eine Flüssigkeitssperre 38 in der Art eines Rückschlagventils, die gegen einen geringen oder gegen gar keinen Öffnungsdruck wirkt und einen Flüssigkeitsstrom nur von dem zweiten Behältnis 12 in das erste zuläßt.

Die Ausgleichsleitung 18 verbindet die beiden Mündungen 26 und 34 miteinander und weist einen weitaus größeren Durchmesser auf als die Leitung 16. Dieser große Durchmesser der Ausgleichsleitung 18 ermöglicht einen schnellen Austausch von Flüssigkeit zwischen den beiden Behältnissen, wenn der Flüssigkeitspegel in dem einen Behältnis 10, 12 über dem des anderen liegt, vorausgesetzt, daß dieser noch oberhalb der Ausgleichsleitung 18 gelegen ist. Vorzugsweise ist der gesamte Durchlaßquerschnitt der Ausgleichsleitung 18 größer als der der Leitung 16.

Die Mündungen 28 und 36 stehen über die Lüftungsleitung 20 miteinander in Verbindung, die einen schnellen Luftaustausch zwischen beiden Behältnissen 10, 12 beschafft, so daß die Flüssigkeit ungehindert vom einen in das andere Behältnis 10, 12 fließen kann. Der gleiche Zweck wird erfüllt, wenn anstatt der Lüftungsleitung 20 in jedem Behältnis 10, 12 eine Ent- bzw. Belüftungsöffnung vorgesehen ist.

Die erfindungsgemäße Vorrichtung setzt sich also im wesentlichen aus der Leitung 16 und der Flüssigkeitssperre 38 zusammen.

Die Funktion der vorbeschriebenen Vorrichtung und des Flüssigkeitsaustausches ergibt sich wie folgt.

In einer Situation, in der sich die beiden Behältnisse 10, 12 auf einer Höhe, also in ebener oder waagerechter Lage, befinden, stellt sich in beiden Behältnissen 10, 12 der gleiche Flüssigkeitspegel ein. Dies ergibt sich daraus, daß bei relativ gut gefüllten Behältnissen eine Entnahme von Flüssigkeit aus dem ersten Behältnis 10 durch die Ausgangsleitung 14 zu einem gleichzeitigen Austausch von Flüssigkeit aus dem linken zweiten in das rechte erste Behältnis 12 in 10 über die Ausgleichsleitung 18 und die Leitung 16 stattfindet. Dieser Vorgang findet so lange statt, bis der Flüssigkeitspegel die mit -A- angegebene Marke erreicht hat. Zwar bleibt der Flüssigkeitspegel in beiden Behältnissen 10, 12 auch dann auf einer Höhe, wenn Flüssigkeit bis unterhalb der Marke -A- abgesaugt wird; der Flüssigkeitsaustausch findet dann aber nur noch über die Leitung 16 statt. Während Flüssigkeit aus den Behältnissen 10, 12 entnommen wird, strömt Umgebungsluft in diese durch den Einfüllstutzen 30 ein, so daß die Bildung eines Vakuums innerhalb der Behältnisse 10, 12 vermieden wird. Die eingetretene Luft strömt dann über die Lüftungsleitung 20 und die Mündung 36 in das zweite Behältnis 12, und sobald sich der Flüssigkeitspegel unter die Oberkante der Mündungen 26, 34 abgesenkt hat, findet auch ein Druckausgleich über die Ausgleichsleitung 18 statt. In der Situation, in der sich beide Behältnisse 10, 12 in ihrer waagerechten Lage befinden, können diese nahezu vollkommen geleert werden, wobei eben stets ein Rest Flüssigkeit zwischen der Eintrittsöffnung 22 und der Bodenfläche des ersten Behältnisses 10 verbleibt.

Wenn die beiden Behältnisse 10, 12 einmal nach der einen und einmal nach der anderen Seite geneigt werden, z. B. aufgrund von Fahrbahnneigungen bei der Fahrt des Ackerschleppers, fließt die Flüssigkeit ständig durch die Ausgleichsleitung 18 von einem Behältnis 10, 12 zum anderen 12, 10 und umgekehrt. Solange die beiden Behältnisse 10, 12 noch ziemlich voll sind, ist auch ausreichend Flüssigkeit bzw. Treibstoff vorhanden, der aus dem ersten Behältnis 10 abgesaugt werden kann, und das gesamte System arbeitet wie bekannte Systeme mit einer herkömmlichen Vorrichtung, die nur eine einzelne Leitung im Bodenbereich beider Behältnisse 10, 12 aufweist. Wenn sich allerdings das Flüssigkeitsvolumen auf die Marke -A- reduziert hat, dann funktionieren die Leitung 16 und die Flüssigkeitssperre 38 so, daß sie eine geringfügige Mindestmenge der Flüssigkeit bzw. des Treibstoffs in dem ersten Behältnis 10 zurückhalten.

Betrachtet man nun einen Zyklus sich abwechselnder geneigter Betriebszustände bei einem Flüssigkeitsstand auf oder unterhalb der Marke -A-, dann bedingt zunächst ein Nachobenkippen des rechten ersten Behältnisses 10 in bezug auf das zweite Behältnis 12, daß Flüssigkeit durch die Ausgleichsleitung 18 hindurch in das linke zweite Behältnis 12 fließt. Dennoch wird eine Restmenge von Flüssigkeit, wie sie durch die Linie -B- angegeben ist, in dem ersten Behältnis 10 aufgrund des Abstandes zwischen der Mündung 26 und der Bodenfläche des ersten Behältnisses 10 zurückgehalten. Das Abströmen dieser Restmenge in das zweite und dann tiefergelegene Behältnis 12 durch die Leitung 16 wird durch die Flüssigkeitssperre 38 verhindert. Das Volumen zwischen den Linien -A- und -B- stellt das Maximalvolumen dar, das nach links in das zweite Behältnis 12 abfließen kann, wenn die Behältnisse 10, 12 geneigt werden und die Linie -B- waagerecht zu liegen kommt. Die in dem ersten Behältnis 10 zurückgehaltene Flüssigkeit kann dann durch die Ausgangsleitung 14 abgesaugt werden, und zwar bis die Eintrittsöffnung 22 oberhalb des mit -C- markierten Flüssigkeitspegels austritt. In den meisten Einsatzverhältnissen und bei den meisten Anwendungsgebieten wird das Volumen zwischen den Linien -B- und -C- nicht aufgebraucht werden, bevor die Behältnisse 10, 12 bzw. der Ackerschlepper wieder in die Waagerechte oder in die entgegengesetzte Neigung geraten.

Sobald der waagerechte Zustand wieder erreicht ist, fließt jegliche Flüssigkeit oberhalb der Linie -A- des linken zweiten Behältnisses 12 über die Ausgleichsleitung 18 und die Leitung 16 in das rechte erste Behältnis 10. Wenn der Flüssigkeitspegel unter die Linie -A- abfällt, fließt die Flüssigkeit nur durch die Leitung 16, um den Flüssigkeitspegel in dem linken zweiten Behältnis 12 auf der gleichen Höhe wie in dem rechten ersten Behältnis 10 zu halten bzw. dorthin zu bringen. Wird das linke zweite Behältnis 12 nach oben gebracht, bis die Linie -D- waagerecht liegt, dann verlagert sich die Flüssigkeit oberhalb der Linie -D- über die Ausgleichsleitung 18 und die Leitung 16 in das rechte Behältnis 10. Wenn die Flüssigkeit nicht mehr durch die Ausgleichsleitung 18 abströmen kann, dann setzt sie ihren Abfluß in das erste Behältnis 10 durch die Leitung 16 fort. Solange das linke zweite Behältnis 12 angehoben ist oder waagerecht liegt mit Bezug auf das rechte erste Behältnis 10, hält die Strömung aus dem linken zweiten Behältnis 12 an, bis es leer ist. In diesem Fall wird eine Zufuhr von Treibstoff zu einem Motor des Ackerschleppers erst dann beendet, wenn dieser in dem rechten ersten Behältnis 10 den Flüssigkeitspegel -E- erreicht hat.

Demgemäß wird dem rechten ersten Behältnis 10 so lange Treibstoff zu- und abgeführt, bis einer der Minimalpegel -E- oder -C- erreicht ist, wenn die Behältnisse 10, 12 bzw. der Ackerschlepper zwischen einer waagerechten und einer nicht waagerechten oder zwischen zwei nicht waagerechten Stellungen pendeln. Die Größe des Volumenstroms zwischen dem zweiten Behältnis 12 und dem ersten Behältnis 10, wenn sich ein Flüssigkeitspegel unterhalb der Mündung 26 der Ausgleichsleitung 18 einstellt, wird bestimmt von dem Durchflußquerschnitt der Leitung 16, der so bemessen sein sollte, daß verglichen mit der Ausgangsleitung 14 mindestens die doppelte Flüssigkeitsmenge hindurchströmen kann. Diese Vorkehrung des doppelten Durchlaßquerschnitts sorgt dafür, daß beim Nachuntenkippen genügend Flüssigkeit bzw. Treibstoff in dem rechten ersten Behältnis 10 angesammelt wird, um einen Betrieb etwa des Ackerschleppers für eine ausreichend und gleich lange Zeitdauer zu ermöglichen, wenn das erste rechte Behältnis 10 nach oben gekippt ist. Vorzugsweise erstreckt sich die Ausgleichsleitung 18 mit den Mündungen 26, 34 ungefähr in der Mitte der Höhe der Behältnisse 10, 12 in diese. Dieses Merkmal erlaubt es dem rechten ersten Behältnis 10, ausreichend Flüssigkeit zurückzuhalten, wenn es nach oben gekippt wird, während die Differenz der Flüssigkeitsvolumina zwischen den beiden Behältnissen 10, 12 gleichzeitig begrenzt wird, um ein Ungleichgewicht zwischen den beiden Flüssigkeitsmengen auf ein Minimum zu begrenzen.

In leicht abgewandelter Form kann die Ausgleichsleitung 18 auch, wie es in Figur 2 gezeigt ist, angeordnet werden, d. h. die Mündung 34' der Ausgleichsleitung 18' kommt in dem linken Behältnis 12 gleich oberhalb der Mündung 32 zu liegen. Durch diese Maßnahme wird Flüssigkeit schnell aus dem linken Behältnis 12 in das rechte Behältnis 10 gefördert, wenn das linke angehoben ist. Infolge der Anordnung der Ausgleichsleitung 18' in der angezeigten geneigten Weise und der Verlagerung der Mündung 34' nach unten wird Flüssigkeit noch durch die Ausgleichsleitung 18' fließen, bis der Flüssigkeitspegel unter die Linie -D'- abfällt. Die Ausgleichsleitung 18' in der gezeigten Stellung bzw. Neigung gewährleistet ein schnelles Nachfüllen von Flüssigkeit in das rechte erste Behältnis 10.

Wenn sich die vorstehenden Ausführungen auch auf zwei voneinander getrennt ausgebildete Behältnisse bezogen haben, so kann die erfindungsgemäße Vorrichtung jedoch auch bei einem einzigen Behältnis mit mehreren Kammern angewendet werden, von denen die mit der Ausgangsleitung 14 versehene Kammer z. B. in der Mitte zwischen den anderen Kammern gelegen sein kann.

## Ansprüche

1. Vorrichtung zum Austausch von Flüssigkeit zwischen einem ersten und mindestens einem zweiten Behältnis (10, 12), insbesondere zwischen zwei miteinander verbundenen Tanks eines Kraftfahrzeuges, mit einer im Bodenbereich beider Behältnisse (10, 12) mündenden Leitung (16), mit einer Ausgleichsleitung (18, 18') zwischen beiden Behältnissen (10, 12) und mit einer Ausgangsleitung (14), die in das erste Behältnis (10) führt, dadurch gekennzeichnet, daß in der Leitung (16) eine einseitig wirkende, sich aufgrund des statischen Überdrucks der Flüssigkeit in dem zweiten Behältnis (12) in der Richtung des ersten Behältnisses (10) öffnende Flüssigkeitssperre (38) und die Ausgleichsleitung (18, 18') oberhalb der Leitung (16) vorgesehen ist.

2. Vorrichtung nach Anspruch 1, dadurch gekennzeichnet, daß die Ausgleichsleitung (18, 18') einen größeren Durchlaßquerschnitt aufweist als die Leitung (16).

3. Vorrichtung nach Anspruch 1 oder 2, dadurch gekennzeichnet, daß die Ausgleichsleitung (18, 18') im wesentlichen in der halben Höhe des ersten Behältnisses (10) in dieses einmündet.

4. Vorrichtung nach Anspruch 1, 2 oder 3, dadurch gekennzeichnet, daß die Mündung (26) der Ausgleichsleitung (18, 18') in dem ersten Behältnis (10) oberhalb oder in der gleichen Höhe wie die Mündung (34, 34') in dem zweiten Behältnis (12) liegt, wenn sich die Behältnisse (10, 12) in waagerechter Lage befinden.

5. Vorrichtung nach einem oder mehreren der vorherigen Ansprüche, dadurch gekennzeichnet, daß die Ausgangsleitung (14) im wesentlichen im Mittenbereich der Bodenfläche des ersten Behältnisses (10) beginnt.

6. Vorrichtung nach einem oder mehreren der vorherigen Ansprüche, dadurch gekennzeichnet, daß der Durchlaßquerschnitt der Leitung (16) im wesentlichen doppelt so groß ist wie der der Ausgangsleitung (14).

7. Vorrichtung nach einem oder mehreren der vorherigen Ansprüche, dadurch gekennzeichnet, daß in beide Behältnisse (10, 12) eine Lüftungsleitung (20) mündet, über die eine Be- und Entlüftung zur Atmosphäre erfolgt.

8. Vorrichtung nach Anspruch 1, dadurch gekennzeichnet, daß die Flüssigkeitssperre (38) als Rückschlagventil ausgebildet ist.

## Claims

1. Device for exchanging a fluid between a first and at least one second tank (10, 12), especially between two connected tanks of a motor vehicle. with a conduit (16) opening into the bottom region of both tanks (10, 12), with an equalising pipe (18, 18') between both tanks (10, 12) and with an outlet pipe (14) , which leads into the first tank (10), characterized in that there is provided in the conduit (16) a one way fluid check (38) which opens in the direction of the first tank (10) in dependence on the static over-pressure of the fluid in the second tank (12) and the equalising pipe (18, 18') is provided above the conduit (16).

2. Device according to claim 1 , characterized in that the equalising pipe (18, 18') has a larger flow cross-section than the conduit (16).

3. Device according to claim 1 or 2, characterized in that the equalising pipe (18, 18') opens into the first tank (10) at substantially half the height thereof.

4. Device according to claim 1, 2 or 3, characterized in that the opening (26) of the equalising pipe (18, 18') into the first tank (10) lies above or at the same height as the opening (34, 34') into the second tank (12), when the tanks (10, 12) are horizontally disposed.

5. Device according to one or more of the preceding claims, characterized in that the outlet pipe (14) begins substantially in the middle region of the bottom surface of the first tank (10).

6. Device according to one or more of the preceding claims, characterized in that the flow cross-section of the conduit (16) is substantially twice as large as that of the outlet pipe (14).

7. Device according to one or more of the preceding claims, characterized in that an air vent pipe (20) opens into the two tanks (10, 12), through which the breathing and venting to the atmosphere takes place.

8. Device according to claim 1, characterized in that the fluid check (38) is formed as a non-return valve.

## Revendications

1. Dispositif pour échanger un liquide entre un premier et au moins un second réservoirs (10,12), notamment entre deux réservoirs, reliés entre eux, d'un véhicule automobile, comportant une canalisation (16) débouchant dans la partie du fond des deux réservoirs (10,12), une canalisation de compensation (18,18') disposée entre les deux réservoirs (10,12) et une canalisation de sortie (14) qui débouche dans le premier réservoir (10), caractérisé en ce que dans la canalisation (16), est prévu un dispositif (38) de blocage du liquide à effet unilatéral, qui s'ouvre en direction du premier réservoir (10) sous l'effet de la surpression statique du liquide dans le second réservoir (12), et que la canalisation de compensation (18,18') est située au-dessus de la canalisation (16).

2. Dispositif selon la revendication 1, caractérisé en ce que la canalisation de compensation (18,18') possède une section transversale de passage supérieure à celle de la canalisation (16).

3. Dispositif selon la revendication 1 ou 2, caractérisé en ce que la canalisation de compensation (18,18') débouche dans le premier réservoir (10) sensiblement à mi-hauteur de ce réservoir.

4. Dispositif selon la revendication 1,2 ou 3, caractérisé en ce que l'embouchure (26) de la canalisation de compensation (18,18') dans le premier réservoir (10) est située à une hauteur supérieure ou à la même hauteur que l'embouchure (34,34') dans le second réservoir (12), lorsque les réservoirs (10,12) sont en position horizontale.

5. Dispositif selon une ou plusieurs des revendications précédentes, caractérisé en ce que la canalisation de sortie (14) commence essentiellement dans la zone médiane de la surface du fond du premier réservoir (10).

6. Dispositif selon une ou plusieurs des revendications précédentes, caractérisé en ce que la section transversale de passage de la canalisation (16) est sensiblement égale au double de celle de la canalisation de sortie (14).

7. Dispositif selon une ou plusieurs des revendications précédentes, caractérisé en ce que dans lesdits réservoirs (10,12) débouche une canalisation d'aération (20), au moyen de laquelle s'effectue une aération ou une désaération en direction de l'atmosphère.

8. Dispositif selon la revendication 1, caractérisé en ce que le dispositif (38) de blocage du liquide est agencé sous la forme d'une soupape antiretour.

FIG. 1

FIG. 2